# EUROPEAN PATENT APPLICATION

(11) **EP 4 506 140 A1**
(43) Date of publication of application: **12.02.2025**
(21) Application number: 23784320.6
(22) Date of filing: 06.04.2023
(51) Int. Cl.: B29C 49/56, B29C 49/42

(54) **BOTTOM MOLD LINKAGE MECHANISM OF BOTTLE BLOWING MACHINE**

(30) Priority: 08.04.2022 CN 202210367508
(71) Applicant: Jiangsu Newamstar Packaging Machinery Co., Ltd, Suzhou, Jiangsu 215618 (CN)
(72) Inventor: QIAN, Zhiliang, Suzhou, Jiangsu 215618 (CN); YE, Peng, Suzhou, Jiangsu 215618 (CN); QIAN, Zhibing, Suzhou, Jiangsu 215618 (CN)
(74) Representative: Fidal Innovation
(86) International application number: PCT/CN2023/086551
(87) International publication number: WO 2023/193757

(57) **Abstract**

The invention discloses a bottom mold linkage mechanism for a bottle blowing machine comprising a frame, a swing shaft, a bottom mold base, and a swing arm. Wherein the swing shaft extends in an up-down direction, the swing shaft is disposed on the frame in a manner that it is able to rotate around its own axis line, the bottom mold base is liftable disposed on the frame, the swing arm is connected to the swing shaft and is able to rotate around the axis line of the swing shaft, the bottom mold linkage mechanism further comprises a cylindrical cam provided with a cylindrical cam groove and a first rotor, the first rotor is arranged in the cylindrical cam groove in a manner that it is able to move along an extension direction of the cylindrical cam groove, the swing arm has a swinging end, one of the first rotor and the cylindrical cam is disposed on the swinging end, and the other one is disposed on the bottom mold base. The linkage mechanism has fewer components, a simple structure, and reliable operation.

## Description

### TECHNICAL FIELD

The present disclosure relates to the field of bottle blowing technology, and in particular, to a bottom mold linkage mechanism for a bottle blowing machine.

### BACKGROUND

Bottle blowing machine is a key equipment for producing various bottles for liquid packaging. The process of blowing bottles in the existing bottle blowing machine mainly consists of unlocking of two side mold bases, opening of the two side mold bases and lowering of a bottom mold base, bottle pickup, feeding preforms, closing of the two side mold bases and rising of the bottom mold base, closing and clamping of the two side mold bases, bottle blowing, etc., wherein the opening and closing of the two side mold bases are controlled by an opening and closing cam, and the specific implementation scheme is: when the blowing module turns over the opening and closing cam, the opening and closing cam drives an opening and closing swing arm and an opening and closing swing shaft fixedly connected to the opening and closing swing arm to swing, and then the two side mold bases are driven to open and close through a mold base driving mechanism; the lifting and lowering of the bottom mold base is controlled by a bottom mold cam. Such scheme has higher requirements for manufacturing, installation and commissioning, and is difficult to meet the requirements of high-speed bottle blowing.

At present, in order to realize high-speed bottle blowing, the lifting movement of the bottom mold base are usually linked to the opening and closing movements of the side mold base or linked to the swinging of the opening and closing swing shaft, and currently there are mainly the following types of linkage that can be implemented:
(1) One of the two side mold bases is connected to the bottom mold base using a spatial cylindrical cam pair, and when the two side mold bases swing relative to each other and open and close relative to each other, the spatial cylindrical cam pair drives the bottom mold base to lift and lower, achieving linkage between the bottom mold base and the side mold bases. This linkage mechanism does not require additional moving parts, has a simple structure, and is reliable in transmission. However, the cylindrical cam pair is usually far away from the central position of the bottom mold base, the load capacity is poor, and one component of the cylindrical cam pair needs to be mounted on the side mold bases, resulting in an increase in the size and mass of the side mold bases and a decrease in dynamic performance;
(2) The bottom mold base is connected to the opening and closing swing arm through a linkage mechanism or a linkage-cam combined mechanism, and when the opening and closing cam drives the two side mold bases to open or close relative to each other through the opening and closing swing arm, the bottom mold base is lifted and lowered through the aforementioned linkage mechanism or linkage-cam combined mechanism, achieving linkage between the bottom mold base and the side mold bases. This type of linkage mechanism requires the addition of two or more moving parts, and the structure, motion, and force situation are complex, the overall reliability and service life of the linkage mechanism cannot be guaranteed, and the installation and maintenance are difficult;
(3) The opening and closing swing shaft is connected to the bottom mold base using a spatial cam pair, and when the opening and closing swing shaft swings, the side mold base performs opening and closing movements, and the bottom mold base synchronously performs lifting movement, achieving linkage between the bottom mold base and the side mold bases. In this linkage mechanism, the bottom mold base is driven to lift and lower by a swing arm connected to the opening and closing swing shaft, due to the small rotation radius of the rotor at the end of the swing arm, the arc path that the rotor rotates through at the same rotation angle is shorter, making the spatial cam hard to design and difficult to implement; at the same time, due to the small curvature of the cam curve, in order to avoid distortion of the cam curve, the size of the rotor is relatively small, making it difficult to be carried; in addition, during the lifting and lowering process of the bottom mold base along the axis direction of the opening and closing swing shaft (i.e. vertical direction), a large dynamic load will be generated, this dynamic load in the vertical direction will generate a large vertical bending moment in the swing arm, which will reduce the strength of the swing arm and cause bending deformation of the swing arm in the vertical direction, affecting the normal contact between the cam rotor and the cam, and deteriorating the motion and dynamic characteristics of the bottom mold base. At the same time, the vertical bending moment in the swing arm will be transmitted to the opening and closing swing shaft, reducing its strength and stiffness, and affecting its stability and service life.

### SUMMARY

The present disclosure is aimed to provided a bottom mold linkage mechanism for a bottle blowing machine, to solve one or more issues in the prior art.

To achieve the above purpose, the technical solution employed by the present disclosure is: A bottom mold linkage mechanism for a bottle blowing machine, comprises a frame, a swing shaft, a bottom mold base, and a swing arm, wherein the swing shaft extends in an up-down direction, the swing shaft is disposed on the frame in a manner that it is able to rotate around its own axis line, the bottom mold base is liftable disposed on the frame, the swing arm is fixedly connected to the swing shaft and is able to swing around the axis line of the swing shaft with the rotation of the swing shaft, the bottom mold linkage mechanism further comprises a cylindrical cam provided with a cylindrical cam groove and a first rotor, the axis line of the cylindrical cam extends collinear with the axis line of the swing shaft, the first rotor is arranged in the cylindrical cam groove in a manner that it is able to move along the extension direction of the cylindrical cam groove, the swing arm has a swinging end, one of the first rotor and the cylindrical cam is disposed on the swinging end, and the other one is disposed on the bottom mold base, wherein the first rotor is cylindrical, and the axis line of the first rotor is perpendicular and intersects with the axis line of the swing shaft.

In some embodiments, the first rotor is disposed in the cylindrical cam groove in a manner that it is able to rotate about its own axis line.

In some embodiments, the first rotor is rotatably disposed on the swinging end through a rotating shaft, and the cylindrical cam is fixedly disposed on the bottom mold base.

In some embodiments, the cylindrical cam is a partial cam with a radian of circumferential surface of less than 360°.

In some embodiments, the bottom mold base has a first side facing the swing shaft and a second side facing away from the swing shaft, the cylindrical cam groove is disposed on the first side, and the swing arm is disposed on the first side as a whole; or, the cylindrical cam groove is disposed on the second side, and the swinging end of the swing arm is disposed on the second side.

In some embodiments, the cylindrical cam groove has a first end portion and a second end portion disposed respectively on opposite ends of the extension direction of the cylindrical cam groove, the cylindrical cam groove spirally extends upward from the first end portion to the second end portion, the swing arm has a first position and a second position, during the process of the swing arm switching from the first position to the second position with the rotation of the swing shaft, the first rotor is moved from the first end portion to the second end portion, and the bottom mold base is lowered in its height level.

In some embodiments, the bottom mold linkage mechanism further comprises a guide base and a second rotor, the guide base is fixedly disposed on the frame, and the second rotor is disposed on the swinging end, wherein the guide base is provided with an arc-shaped groove, the arc-shaped extension trajectory of the arc-shaped groove takes the axis line of the swing shaft as the rotation centerline, the second rotor is disposed in the arc-shaped groove in a manner that it is able to move along the extension direction of the arc-shaped groove, and the second rotor is supported on a lower groove wall of the arc-shaped groove in the up-down direction.

In some embodiments, the guide base comprises a first guide member and a second guide member respectively fixed on the frame, the first guide member and the second guide member are spaced apart in the up-down direction, a lower surface of the first guide member and an upper surface of the second guide member are both perpendicular to the axis line of the swing shaft, and the arc-shaped groove is formed between the lower surface of the first guide member and the upper surface of the second guide member.

In some embodiments, the second rotor is cylindrical, and during the process of the first rotor moving along the cylindrical cam groove, the second rotor is always in rolling contact with the arc-shaped groove.

In some embodiments, the first guide member and the second guide member are both arc-shaped members, and the arc-shaped extension trajectory of the arc-shaped members takes the axis line of the swing shaft as the rotation centerline.

In some embodiments, the first rotor and the second rotor are both cylindrical, the first rotor and the second rotor are rotatably mounted on the swinging end jointly through the rotating shaft, and the first rotor and the second rotor are distributed in sequence along the axial direction of the rotating shaft.

In some embodiments, there are two second rotors spaced apart along the axial direction of the rotating shaft, and during the process of the first rotor moving along the cylindrical cam groove, one second rotor is in contact with the first guide member, and the other second rotor is in contact with the second guide member.

In some embodiments, the first rotor and/or the second rotor are rolling bearings.

In some embodiments, one of the bottom mold base and the frame is provided with a guide groove, and the other one thereof is provided with a guide column, wherein the guide column and the guide groove each extend along the up-down direction, and the guide column is disposed in the guide groove in a sliding fit along the up-down direction manner.

Another technical solution adopted by the present disclosure is: a bottom mold linkage mechanism for a bottle blowing machine, comprises a frame, a swing shaft disposed on the frame in a manner that it is able to rotate around its own axis line and to control the opening and closing of side mold bases, a bottom mold base liftable disposed on the frame, and a swing arm with one end being connected to the swing shaft, one of the other end of the swing arm and the bottom mold base is provided with a cylindrical cam and the other thereof is provided with a first rotor that is able to rotate about its own axis line, the first rotor is rotatably disposed in a cam curve of the cylindrical cam, the cam curve is inclined up and down along the circumferential direction, and the rotation radius of the other end of the swing arm is greater than the distance between the bottom mold base and the swing shaft;
the bottom mold linkage mechanism further comprises a first guide member and a second guide member that are disposed on the frame in a manner that they are spaced along an up-down direction, and a second rotor disposed on the other end of the swing arm in a manner that it is able to rotate about its own axis line, and when the swing arm is rotated, the second rotor always abuts between the first guide member and the second guide member;
the cylindrical cam or the first rotor is disposed on a side facing the bottom mold base on the other end of the swing arm, and the second rotor is disposed on a side facing away from the bottom mold base on the other end of the swing arm.

Preferably, the swing arm has a first position and a second position:
when the swing arm is in the first position, the two side mold bases are in a closed position, and the bottom mold base is at the highest point;
when the swing arm is in the second position, the two side mold bases are in an opened position, and the bottom mold base is at the lowest point.

Preferably, the axis line of the cylindrical cam coincides with the axis line of the swing shaft.

Preferably, the cylindrical cam is a partial cam disposed on a side of the bottom mold base facing away from the swing arm, and the partial cam has a radian of circumferential surface less than 360°.

More preferably, the first rotor and the second rotor are coaxially disposed on opposite sides of the other end of the swing arm, and the axis line of the first rotor is perpendicular to the axis line of the swing shaft.

More preferably, the first rotor is disposed on the other end of the swing arm, and the rotation radius of the first rotor is greater than the distance between the bottom mold base and the axis line of the swing shaft.

Preferably, the first guide member and the second guide member are respectively disposed on a side of the bottom mode base facing away from the swing shaft.

Preferably, the first guide member and the second guide member are arc-shaped guide members, an arc-shaped interval is formed between the first guide member and the second guide member for accommodating the second rotor, and the axis line of the arc-shaped interval coincides with the axis line of the swing shaft.

Preferably, a lower surface of the first guide member and an upper surface of the second guide member are both perpendicular to the axis line of the swing shaft

Preferably, in the frame and the bottom mold base, one is provided with a guide groove parallel to the axis line of the swing shaft, and the other one is provided with a guide column parallel to the axis line of the swing shaft, and the guide column is liftable disposed in the guide groove.

Due to the use of the above technical solutions, the present disclosure has the following advantages over the prior art: The present disclosure relates to a bottom mold linkage mechanism for a bottle blowing machine, wherein by disposing a first rotor between the swinging end of the swing arm and the bottom mold base and by providing a cylindrical cam with a cylindrical cam groove, the first rotor is cooperatively disposed in the cylindrical cam groove, so that a cylindrical cam pair is formed between the swing arm and the bottom mold base, which directly converts the rotation of the swing shaft into the lifting movement of the bottom mold base, without increasing the number of moving parts, resulting in fewer components, simpler structure, and more reliable operation of the entire linkage mechanism.

### BRIEF DESCRIPTION OF DRAWINGS

Figure 1 is a schematic top view of the overall structure of a bottom mold linkage mechanism and a side mold base linkage mechanism in Embodiment 1 of the present disclosure;
Figure 2 is a schematic three-dimensional structure diagram of the bottom mold linkage mechanism in Embodiment 1 of the present disclosure;
Figure 3 is a schematic three-dimensional structure diagram of the bottom mold linkage mechanism of Figure 2 after removing the first guide member and the second guide member, where the swing arm is in the first position;
Figure 4 is a schematic three-dimensional structure diagram of the bottom mold linkage mechanism of Figure 3, where the swing arm is in a position between the first position and the second position;
Figure 5 is a schematic three-dimensional structure diagram of the bottom mold linkage mechanism of Figure 3, where the swing arm is the second position;
Figure 6 is a schematic three-dimensional structure diagram of the bottom mold linkage mechanism of Figure 3 after further removing the swing arm, the first rotor and the second rotor;
Figure 7 is a schematic diagram of the installation structure of the first guide member and the second guide member on the frame in the bottom mold linkage mechanism of Figure 2;
Figure 8 is a schematic structure diagram of the swing arm, the first rotor and the second rotor in the bottom mold linkage mechanism of Figure 2;
Figure 9 is a schematic diagram of the connection structure of the bottom mold base and the cylindrical cam on the frame in the bottom mold linkage mechanism of Figure 2;
Figure 10 is a schematic three-dimensional structure diagram of the second guide member in the bottom mold linkage mechanism of Figure 2;

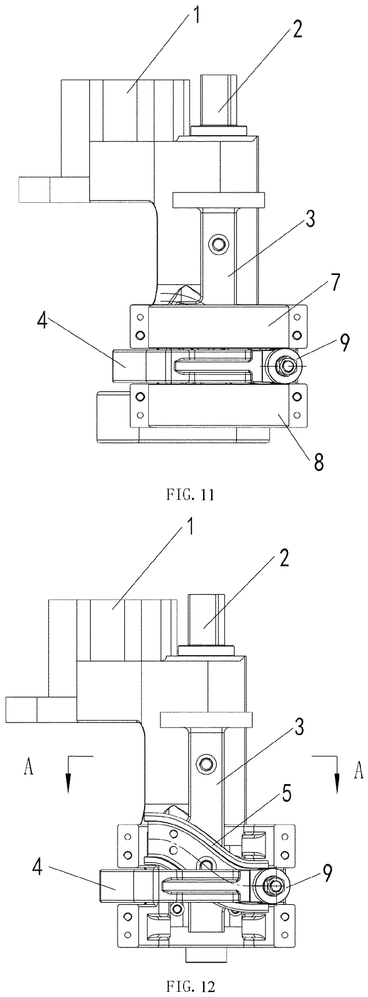

Figure 11 is a schematic front view of the bottom mold linkage mechanism of Figure 2;
Figure 12 is a schematic diagram based on Figure 11 after removing the first guide member and the second member;
Figure 13 is a schematic diagram of the cross-sectional structure taken along Direction A-A in Figure 12;
Figure 14 is a schematic diagram of the cross-sectional structure of a bottom mold linkage mechanism in Embodiment 2 along a direction corresponding to Direction A-A in Figure 12;
Figure 15 is a schematic overall structure diagram of a bottom mold linkage mechanism in Embodiment 3;
Figure 16 is a schematic diagram based on Figure 15 after removing the first guide member;
Figure 17 is a schematic diagram of the installation structure of the first guide member and the second guide member on the frame in the bottom mold linkage mechanism of Figure 15;
Figure 18 is a schematic structure diagram of the swing arm, the first rotor and the second rotor in the bottom mold linkage mechanism of Figure 15;
Figure 19 is a schematic diagram of the connection structure of the bottom mold base and the cylindrical cam on the frame in the bottom mold linkage mechanism of Figure 15;
Figure 20 is a schematic top view of the structure of the bottom mold linkage mechanism of Figure 15;
Figure 21 is a schematic diagram of the forces acting on the first rotor and the second rotor on the swing arm in the bottom mold linkage mechanism of Figure 15;
Figure 22 is a schematic front view of the structure of a bottom mold linkage mechanism of Embodiment 4 after removing the first guide member and the second guide member;
Figure 23 is a schematic diagram of the forces acting on the first rotor and the second rotor on the swing arm in the bottom mold linkage mechanism of Figure 22;
   wherein, 1, frame; 11, guide groove; 2, swing shaft; 3, bottom mold base; 31, guide column; 4, swing arm; 41, swinging end; 42, mounting groove; 5, cylindrical cam; 51, cylindrical cam groove; 52, buffer; 6, first rotor; 7, first guide member; 8, second guide member; 9, second rotor; 10, rotating shaft; 20, side mold base linkage mechanism; 201, side mold base.

### DESCRIPTION OF EMBODIMENTS

The technical solution of present disclosure is further explained below in detail combining with specific embodiments and the accompanying drawings.

Only some exemplary embodiments are simply described below. As recognized by those skilled in the art, the described embodiments can be modified in various ways without departing from the spirit or scope of the present disclosure. Therefore, the accompanying drawings and descriptions are considered to be exemplary rather than restrictive in nature.

In the description of embodiments of the present disclosure, it should be noted that the orientations or positional relationships indicated by the terms "length", "inner", etc. are based on those shown in the accompanying drawings, are only for the convenience of embodiments of describing the present disclosure and simplifying the description, rather than indicating or implying that the indicated device(s) or element(s) must have a specific orientation, be constructed and operated in a specific orientation, and therefore should not be construed as a limitation of embodiments of the present disclosure.

Furthermore, the terms "first" and "second" are used for descriptive purposes only and should not be construed to indicate or imply relative importance or imply the number of technical features indicated. Thus, a feature defined as "first" and "second" may explicitly or implicitly include one or more said features. In the description of embodiments of the present disclosure, "a plurality of" refers to two or more, unless otherwise expressly and specifically defined.

In embodiments of the present disclosure, unless otherwise expressly specified and limited, the terms "mount", "link", "connect", "fix" and other terms should be understood in a broad sense, for example, it may be fixedly connected or detachably connected, or integrated; it may be mechanically connected or electrically connected, or in communication; it can be directly connected or indirectly connected through an intermediate medium, or it can be the internal communication of two elements or the interaction relationship between two elements. For those of ordinary skill in the art, the specific meanings of the above terms in embodiments of the present disclosure can be understood according to specific situations.

In embodiments of the present disclosure, unless otherwise expressly specified and limited, a first feature being "on" or "under" a second feature may include direct contact between the first feature and the second feature, as well as contact between the first feature and the second feature through an intermediate medium between them rather than direct contact. Also, the first feature being "on", "above", or "over" the second feature includes that the first feature is directly above or obliquely above the second feature, or simply means that the first feature has a higher level than the second feature. The first feature being "under", "below" or "underneath" the second feature includes that the first feature is directly below or obliquely below the second feature, or simply means that the first feature has a lower level than the second feature.

The content disclosed below provides many different implementations or examples to realize different structures of embodiments of the present disclosure. In order to simplify the disclosure of embodiments, components and arrangements of particular examples are described below. Of course, they are only examples and are not intended to limit embodiments of the present disclosure. In addition, embodiments of the present disclosure may repeat reference numbers and/or reference letters in different embodiments for the purpose of simplification and clarity, which does not indicate the relationship between the various implementations and/or arrangements discussed.

### Embodiment 1

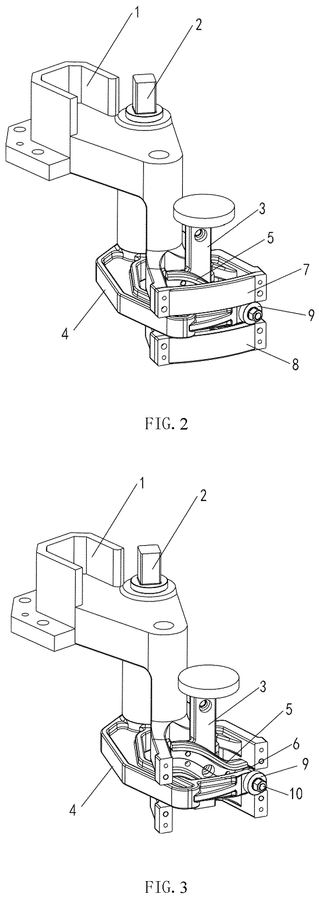

A bottom mold linkage mechanism for a bottle blowing machine, as shown in Figures 2 to 5, comprises a frame 1, a swing shaft 2, a bottom mold base 3, and a swing arm 4, where the swing shaft 2 extends in an up-down direction, the swing shaft 2 is disposed on the frame 1 in a manner that it is able to rotate around its own axis line, the bottom mold base 3 is disposed on the frame 1 in a manner that it is able to lift and lower along the up-down direction, and the swing arm 4 is fixedly connected to the swing shaft 2 and is able to swing around the axis line of the swing shaft 2 with the rotation of the swing shaft 2.

The bottom mold linkage mechanism further comprises a first rotor 6, and a cylindrical cam 5 provided with a cylindrical cam groove 51, the axis line of the cylindrical cam 5 extends collinear with the axis line of the swing shaft 2, the cylindrical cam groove 51 is inclined up and down along the circumferential direction on the outer periphery of the cylindrical cam 5, the extension trajectory curve of the cylindrical cam groove 51 is projected as an arc on a plane perpendicular to the axis line of the swing shaft 2, with the axis line of the swing shaft 2 as the rotation centerline.

The first rotor 6 is arranged in the cylindrical cam groove 51 in a manner that it is able to move along the extension direction of the cylindrical cam groove 51, where the swing arm 4 has a swinging end 41, one of the first rotor 6 and the cylindrical cam 5 is disposed on the swinging end 41, and the other one is disposed on the bottom mold base 3, by the swinging of the swing arm 4 around the axis line of the swing shaft 2, the first rotor 6 is moved along the cylindrical cam groove 51, thereby the linkage causes the lifting movement of the bottom mold base 3 in the up-down direction. In this way, without increasing the number of moving parts, the rotation of the swing shaft 2 is directly converted into the up and down movement of the bottom mold base 3, with fewer components, a simple structure, and reliable operation.

In this embodiment, the first rotor 6 is cylindrical, the axis line of the first rotor 6 is perpendicular and intersects with the axis line of the swing shaft 2, and the first rotor 6 is disposed in the cylindrical cam groove 51 in a manner that it is able to rotate about its own axis line. Here, the first rotor 6 is rotatably mounted on the swinging end 41 of the swing arm 4 through a rotating shaft 10, and the cylindrical cam 5 is fixedly disposed on the bottom mold base 3. During the swinging process of the swing arm 4 around the axis line of the swing shaft 2, the first rotor 6 is in rolling fit with the groove wall of the cylindrical cam groove 51.

In other embodiments, the cylindrical cam 5 with the cylindrical cam groove 51 may be fixed on the swinging end 41, and the first rotor 6 may be disposed on the bottom mold base 3, and the swinging of the swing arm 4 drives the first rotor 6 to move in the cylindrical cam groove 51, thereby driving the bottom mold base 3 to lift and lower along the up-down direction.

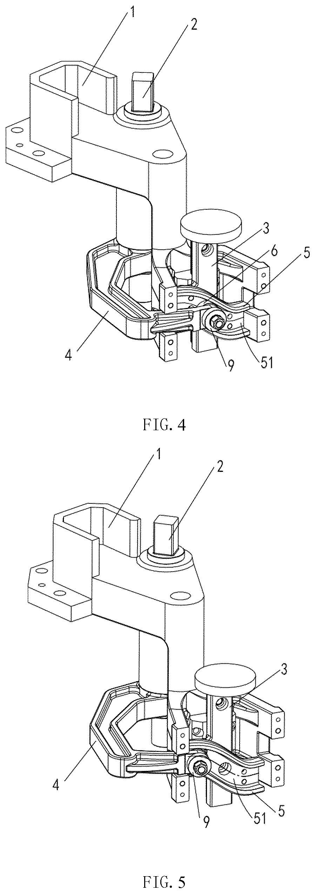

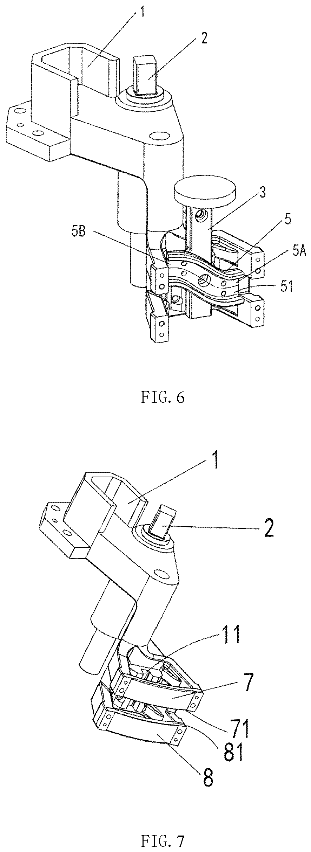

In this embodiment, referring to Figures 2 to 6, as well as Figure 9, the cylindrical cam 5 is a partial cam with a radian of circumferential surface less than 360 °, where only the part provided with the cylindrical cam groove 51 is retained to avoid interference with components such as the frame 1 and the bottom mold base 3. The cylindrical cam groove 51 has a first end portion 5A and a second end portion 5B disposed respectively on opposite ends of its own extension direction, and the cylindrical cam groove 51 spirally extends upward from the first end portion 5A to the second end portion 5B. During the swinging process of the swing arm 4 around the axis line of the swing shaft 2, there are a first position and a second position, as shown in Figures 2 and 3, when the swing arm 4 is in the first position, and the first rotor 6 is located at the first end portion 5A; when the swing arm 4 is in the second position, as shown in Figure 5, the first rotor 6 is located at the second end portion 5B. That is to say, during the swinging process of the swing arm 4 around the axis line of the swing shaft 2 and switching from the first position to the second position, the first rotor 6 is moved from the first end portion 5A to the second end portion 5B in the cylindrical cam groove 5, causing the bottom mold base 3 to descend and reduce its height level.

As shown in Figures 2 to 10, a guide structure is provided between the bottom mold base 3 and the frame 1 to provide stable guidance for the lifting movement of the bottom mold base 3 in the up-down direction, in this embodiment, the guide structure comprises a guide groove 11 and a guide column 31 that extend in the up-down direction respectively, the extension directions of both the guide groove 11 and the guide column 31 are parallel to the axis line of the swing shaft 2, the guide groove 11 is provided on the frame 1, the guide column 31 is fixed on the bottom mold base 3, and the guide column 31 is inserted into the guide groove 11 in a sliding fit. Of course, in other embodiments, the guide groove 11 may also be disposed on the bottom mold base 3 and the guide column 31 may be disposed on the frame 1.

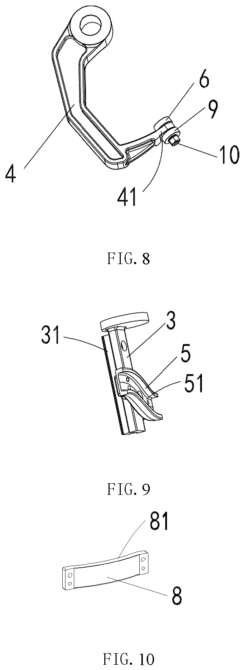

As shown in Figures 2 to 6, the bottom mold base 3 has a first side facing the swing shaft 2 and a second side facing away from the swing shaft 2. In this embodiment, as shown in Figure 8, the swing arm 4 is composed of multiple straight arms connected in sequence, with two adjacent straight arms forming an angle with each other, such that one end portion of the swing arm 4 is fixedly connected to the swing shaft 2 on the first side, the swinging end 41 of the swing arm 4 is disposed on the second side, and the cylindrical cam groove 51 is disposed on the second side, and cooperates with the first rotor 6 disposed on the swinging end 41. In this way, the rotation radius of the first rotor 6, that is, the distance between the first rotor 6 and the axis line of the swing shaft 2, is greater than the distance between the mold core of the bottom mold base 3 and the axis line of the swing shaft 2, which makes the arc path of the first rotor 6 longer when passing through the same rotation angle, and the curvature of the extension trajectory curve of the cylindrical cam groove 51 can be large enough to avoid distortion of the extension trajectory curve of the cylindrical cam groove 51, thereby ensuring a stable fit with the first rotor 6, and which also makes the design of the cylindrical cam 5 simpler and easier to implement, at the same time, due to the larger curvature of the extension trajectory curve of the cylindrical cam groove 51, the diameter size of the first rotor 6 may be designed to be larger, extending the service life of the cylindrical cam pair composed of the cylindrical cam 5 and the first rotor 6.

As shown in Figures 2 to 10, the bottom mold linkage mechanism in this embodiment further comprises a guide base and a second rotor 9, the guide base is fixedly disposed on the frame 1, and the second rotor 9 is disposed on the swinging end 41 of the swing arm 4, wherein the guide base is provided with an arc-shaped groove, the arc-shaped extension trajectory of the arc-shaped groove takes the axis line of the swing shaft 2 as the rotation centerline, the second rotor 9 is disposed in the arc-shaped groove in a manner that it is able to move along the extension direction of the arc-shaped groove, and the second rotor 9 is supported on a lower groove wall of the arc-shaped groove in the up-down direction. In this embodiment, the guide base comprises a first guide member 7 and a second guide member 8 respectively fixed on the frame 1, the first guide member 7 and the second guide member 8 are spaced apart in the up-down direction, the first guide member 7 is located above the second guide member 8, and a part of the swing arm 4 extends between the first guide member 7 and the second guide member 8. A lower surface 71 of the first guide member 7 and an upper surface of the second guide member 8 are both perpendicular to the axis line of the swing shaft 2, and the arc-shaped groove described above is formed between the lower surface 71 of the first guide member 7 and the upper surface of the second guide member 8.

Here, the first guide member 7 and the second guide member 8 are both arc-shaped members with the same shape and size, the arc-shaped extension trajectory of the arc-shaped members takes the axis line of the swing shaft 2 as the rotation centerline, and the distance between the two is equal to the diameter of the second rotor 9. The second rotor 9 is cylindrical, and during the process of the first rotor 6 moving along the cylindrical cam groove 51, the second rotor 9 is always in rolling contact with the arc-shaped groove.

In this embodiment, the second rotor 9 is also cylindrical, the second rotor 9 and the first rotor 6 is together mounted on the swinging end 41 of the swing arm 4 through a rotating shaft 10, and the first rotor 6 and the second rotor 9 are distributed in sequence along the axial direction of the rotating shaft 10. Here, the first rotor 6 and the second rotor 9 are respectively located on opposite sides in the thickness direction of the swinging end 41, that is, the first rotor 6 is located on the side facing the bottom mold base 3 on the swinging end 41, and the second rotor 9 is located on the side facing away from the bottom mold base 3 on the swinging end 41, making installation very convenient. The first rotor 6 and the second rotor 9 adopt the same type of rolling bearings, which are maintenance free, have fewer types of parts, and have a guaranteed service life.

In this way, when the first rotor 6 mounted on the swinging end 41 of the swing arm 4 is subjected to the vertical dynamic load of the bottom mold base 3, the dynamic load can be transmitted to the frame 1 through the second rotor 9 mounted coaxially and the first guide member 7 and/or the second guide member 8 in contact with it, thereby reducing the load on the first rotor 6 and ensuring the stable and reliable movement of the first rotor 6 in the cylindrical cam groove 51, which is conducive to ensuring the reliability and stability of the bottom mold linkage mechanism.

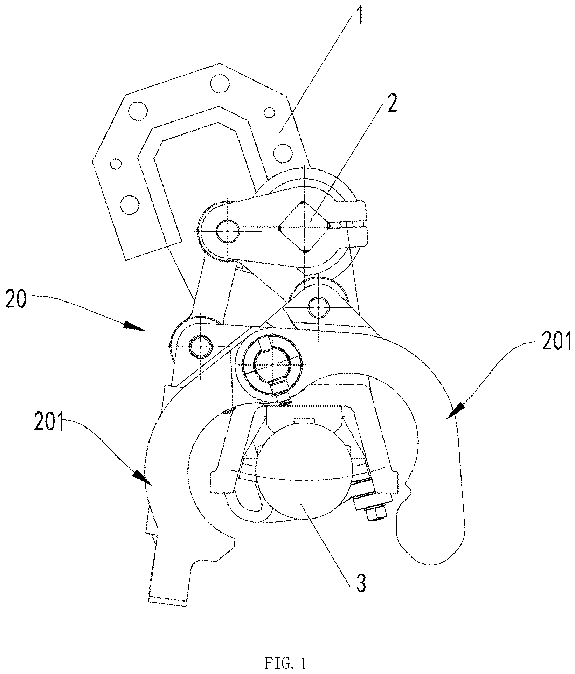

The overall structural schematic diagram of the bottom mold linkage mechanism and a side mold base linkage mechanism 20 for a bottle blowing machine in this embodiment is shown in Figure 1, where the side mold base linkage mechanism 20 comprises two sets of side mold bases 201, a linkage rod group connected between the swing shaft 2 and the two sets of side mold bases 201, and the two sets of side mold bases 201 are disposed above the bottom mold base 3. When the swing arm 4 is in the first position as shown in Figure 3, the bottom mold base 3 is at its highest point, and the two sets of side mold bases 201 are relatively closed, the bottle blowing machine is in a closed state; when the swing arm 4 is in the second position, the bottom mold base 3 is at its lowest point, and the two sets of side mold bases 201 are relatively open, and the bottle blowing machine is in an opened state.

When the bottom mold linkage mechanism for a bottle blowing machine in this embodiment is working: during mold opening, the swing shaft 2 is rotated clockwise, the two sets of side mold bases 201 are driven to open relative to each other, at the same time, the swing arm 4 drives the first rotor 6 to rotate clockwise, thereby driving the cylindrical cam 5 to descend synchronously with the bottom mold base 3; during mold closing, the swing shaft 2 is rotated counterclockwise, the two sets of side mold bases 201 are driven to close relative to each other, at the same time, the swing arm 4 drives the first rotor 6 to rotate counterclockwise, thereby driving the cylindrical cam 5 to lift synchronously with the bottom mold base 3.

### Embodiment 2

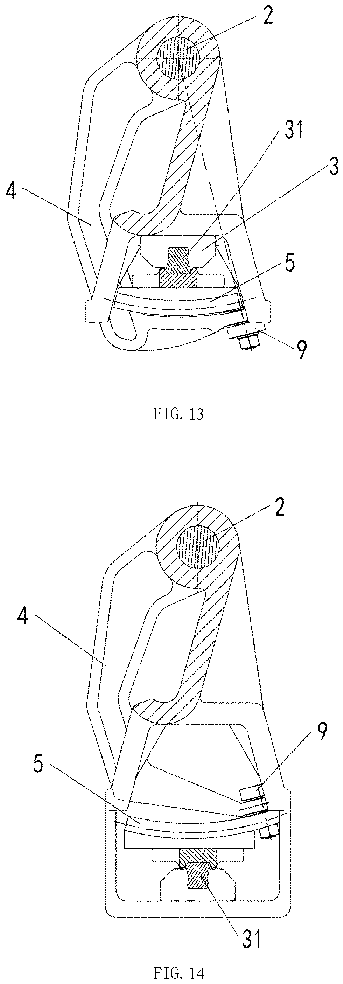

The bottom mold linkage mechanism for a bottle blowing machine shown in Figure 14 differs from Embodiment 1 mainly in that, in this embodiment, the cylindrical cam groove 51 is disposed on the first side of the bottom mold base 3, and the swing arm 4 is integrally disposed on the first side. In the case where the distance between the axis line of the swing shaft 2 and the mold core of the bottom mold base 3 is large enough, arranging the cylindrical cam groove 51 in this way can also make the first rotor 6 have a sufficiently large rotation radius, so that the first rotor 6 has a long motion stroke in the cylindrical cam groove 51, thus the curvature of the extension trajectory curve of the cylindrical cam groove 51 is large enough to avoid distortion of the cylindrical cam groove 51 and ensure a stable fit with the first rotor 6.

### Embodiment 3

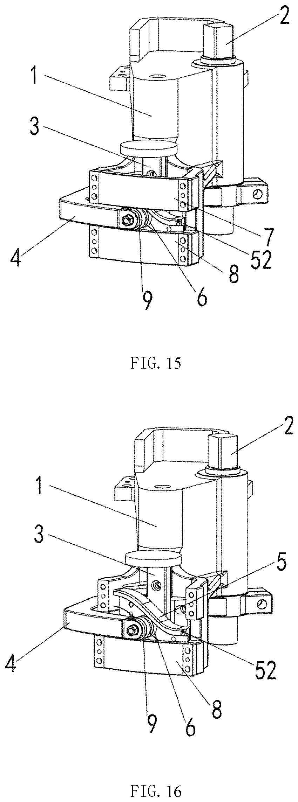

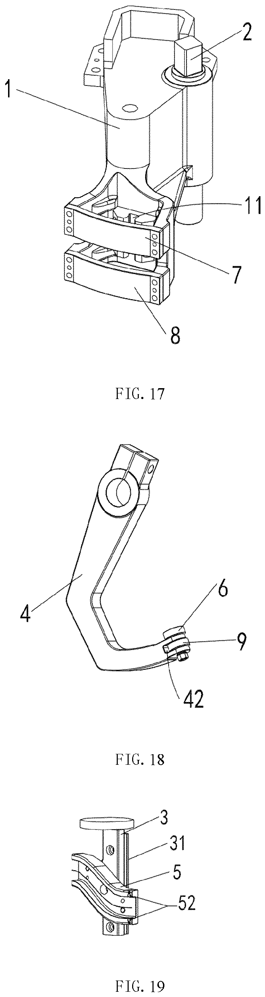

The bottom mold linkage mechanism for a bottle blowing machine shown in Figures 15 to 21 differs from Embodiment 1 mainly in that: (1) A mounting groove 42 is provided on the swinging end 41, the mounting groove 42 is specifically a U-shaped groove, the second rotor 9 is disposed in the mounting groove 42 in a manner that it is rotatable around the axis line of the rotating shaft 10, and the rotating shaft 6 specifically adopts a screw with a bolt, which may easily mount the first rotor 6 and the second rotor 9 coaxially on the swinging end 41; (2) Buffers 52 are respectively provided on the first end portion 5A and/or the second end portion 5B of the cylindrical cam groove 51, the buffer 52 is specifically a cylindrical structure made of elastic material, so as to reduce or eliminate the impact and noise generated during the upward and/or downward movement of the bottom mold base 3 when the first rotor 6 runs to the first end portion 5A and/or the second end portion 5B of the cylindrical cam groove 51.

As shown in Figures 15 to 21, in the bottom mold linkage mechanism for a bottle blowing machine in this embodiment, as in Embodiment 1, the first rotor 6 is disposed on the second side of the bottom mold base 3, and the rotation radius of the first rotor 6 is greater than the distance L between the mold core A of the bottom mold base 3 and the axis line of the swing shaft 2, during the rotating process of the swing arm 4 with the swing shaft 2, the contact area between the first rotor 6 and the cylindrical cam 5 is S, and the arc path of the first rotor 6 is relatively long, which is conducive to simplifying the design and easy implementation of the cylindrical cam 5.

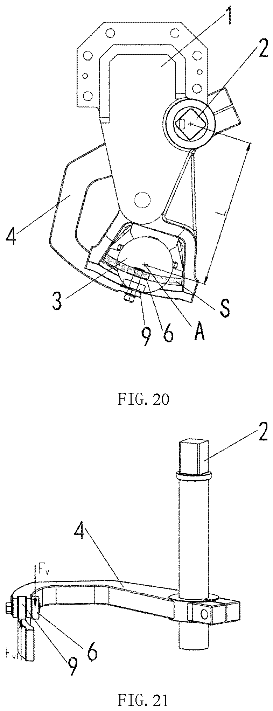

As shown in Figures 20 and 21, the vertical dynamic load exerted by the bottom mold base 3 on the first rotor 6 is denoted as Fᵥ, when the vertical dynamic load Fᵥ is downward, the second rotor 9 contacts and presses against the second guide member 8 below, and the load is transmitted to the frame 1 through the second guide member 8; when the vertical dynamic load Fᵥ is upward, the second rotor 9 contacts and presses against the first guide member 7 above, and the load is transmitted to the frame 1 through the first guide member 7. In this way, it can significantly reduce the force and deformation of the swing arm 4 under the vertical dynamic load Fᵥ.

When adopting this technical solution, there is an unbalanced torque on the rotating shaft 10 of the first rotor 6 and the second rotor 9, under the action of the torque, the rotating shaft 10 will deflect, which may affect the normal contact between the first rotor 6 and the cylindrical cam 5, and between the second rotor 9 and the first guide member 7 and the second guide member 8. Therefore, when adopting this technical solution, the swing arm 4 should have sufficient torsional rigidity.

### Embodiment 4

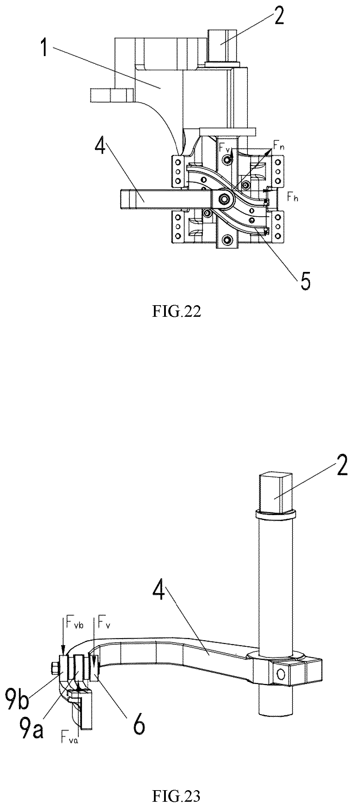

The bottom mold linkage mechanism for a bottle blowing machine shown in Figures 22 to 23 differs from Embodiment 3 mainly in that, in this embodiment, there are two second rotors 9 axially spaced apart along the rotating shaft 10, during the movement of the first rotor 6 along the cylindrical cam groove 51, one of the two second rotors 9 contacts the lower surface 71 of the first guide member 7, and the other one contacts the upper surface 81 of the second guide member 8.

Specifically, the swinging end 41 of the swing arm 4 is also provided with a mounting groove 42, where one second rotor 9 is disposed in the mounting groove 42, the other second rotor 9 is disposed outside the mounting groove 42, and the first rotor 6 and the two second rotors 9 are distributed in sequence along the axial direction of the rotation shaft 10.

As shown in Figure 23, the vertical dynamic load exerted by the bottom mold base 3 on the first rotor 6 is denoted as Fᵥ, when the vertical dynamic load Fᵥ is downward, the second rotor 9a contacts and presses against the second guide member 8, and is subjected to the upward vertical dynamic load Fᵥₐ, the second rotor 9b contacts and presses against the second guide member 7, and is subjected to the downward vertical dynamic load F_{vb}, and the three loads Fᵥ, Fᵥₐ, and F_{vb} not only maintain force balance in the vertical direction, but also maintain moment balance; when the vertical load Fᵥ is upward, the second rotor 9a contacts and presses against the first guide member 7, and is subjected to the downward vertical dynamic load Fᵥₐ, the second rotor 9b contacts and presses against the second guide member 7, and is subjected to the upward vertical dynamic load F_{vb}, and the three loads Fᵥ, Fᵥₐ, and F_{vb} also achieve force balance and moment balance. In this way, it can be significantly reduce the force and deformation of the swing arm 4 under the vertical dynamic load Fᵥ, and avoid the deflection of the rotating shaft 10 on which the first rotor 6 and the second rotor 9 are mounted, ensuring that the first rotor 6 can make normal contact with the cylindrical cam 5. Obviously, in order to ensure the good performance of the bottom mold linkage mechanism, the technical solution of this embodiment should be adopted when the torsional rigidity of the swinging end 41 of the swing arm 4 is low.

In summary, the bottom mold linkage mechanism for a bottle blowing machine in various embodiments of the present disclosure has the following advantages:
(1) The swing arm 4 is fixedly connected to the swing shaft 2, and by forming a cylindrical cam pair by the cylindrical cam 5 between the swing arm 4 and the bottom mold base 3 and the first rotor 6, the rotation of the swing shaft 2 is directly converted into the up and down lifting movement of the bottom mold base 3, without increasing the number of moving parts, which makes the entire linkage mechanism have fewer components, a simple structure, and reliable operation;
(2) The distance between the axis line of the swing shaft 2 and the mold core of the bottom mold base 3 is relatively large, the contact area between the cylindrical cam 5 and the first rotor 6 is relatively long, and the cylindrical cam profile with a smaller pressure angle can obtain a sufficiently large effective stroke of the bottom mold base 3, which improves the dynamic performance of the cylindrical cam pair composed of the cylindrical cam 5 and the first rotor 6, increases the adaptability of the profile of the cylindrical cam 5 to the radius of the first rotor 6, and facilitates designing the size of the first rotor 6 to be relatively large, thereby extending the service life of the cylindrical cam pair;
(3) By arranging the first guide member 7, the second guide member 8, and the second rotor 9 in contact with each other, the influence of the dynamic load of the bottom mold base 3 along the axial direction of the swing shaft 2 on the swing arm 4 can be reduced or eliminated, simplifying the load situation of the swinging end 41 of the swing arm 4 and the swing shaft 2, reducing the stress and deformation of the swing arm 4 and the swing shaft 2, which on the one hand can reduce the structural size of the swing arm 4, and on the other hand can improve the usage performance of the bottom mold linkage mechanism;
(4) When the swing arm 4 is cast or forged by a blank, only the shaft hole for mounting and connecting with the swing shaft 2 and the swinging end 41 for mounting the first rotor 6 and the second rotor 9 need to be machined, resulting in low manufacturing costs and easy installation and maintenance.

The embodiments described above are only for illustrating the technical concepts and features of the present disclosure, and intended to make a person familiar with the technology being able to understand the content of the present disclosure and thereby implement it, and should not limit the protective scope of this disclosure. Any equivalent variations or modifications according to the spirit of the present disclosure should be covered by the protective scope of the present disclosure.

## Claims

1. A bottom mold linkage mechanism for a bottle blowing machine, comprising a frame, a swing shaft, a bottom mold base, and a swing arm, wherein the swing shaft extends in an up-down direction, the swing shaft is disposed on the frame in a manner that it is able to rotate around its own axis line, the bottom mold base is liftable disposed on the frame, the swing arm is fixedly connected to the swing shaft and is able to swing around the axis line of the swing shaft with the rotation of the swing shaft, **characterized in that,** the bottom mold linkage mechanism further comprises a cylindrical cam provided with a cylindrical cam groove and a first rotor, an axis line of the cylindrical cam extends collinear with the axis line of the swing shaft, the first rotor is arranged in the cylindrical cam groove in a manner that it is able to move along an extension direction of the cylindrical cam groove, the swing arm has a swinging end, one of the first rotor and the cylindrical cam is disposed on the swinging end, and the other one is disposed on the bottom mold base, wherein the first rotor is cylindrical, and the axis line of the first rotor is perpendicular and intersects with the axis line of the swing shaft.

2. The bottom mold linkage mechanism for a bottle blowing machine according to claim 1, **characterized in that,** the first rotor is disposed in the cylindrical cam groove in a manner that it is able to rotate about its own axis line.

3. The bottom mold linkage mechanism for a bottle blowing machine according to claim 2, **characterized in that,** the first rotor is rotatably disposed on the swinging end through a rotating shaft, and the cylindrical cam is fixedly disposed on the bottom mold base.

4. The bottom mold linkage mechanism for a bottle blowing machine according to claim 1, **characterized in that,** the cylindrical cam is a partial cam with a radian of circumferential surface of less than 360°.

5. The bottom mold linkage mechanism for a bottle blowing machine according to claim 1, **characterized in that,** the bottom mold base has a first side facing the swing shaft and a second side facing away from the swing shaft, the cylindrical cam groove is disposed on the first side, and the swing arm is disposed on the first side as a whole; or, the cylindrical cam groove is disposed on the second side, and the swinging end of the swing arm is disposed on the second side.

6. The bottom mold linkage mechanism for a bottle blowing machine according to claim 1, **characterized in that,** the cylindrical cam groove has a first end portion and a second end portion respectively disposed on opposite ends of the extension direction of the cylindrical cam groove, the cylindrical cam groove spirally extends upward from the first end portion to the second end portion, the swing arm has a first position and a second position, during the process of the swing arm switching from the first position to the second position with the rotation of the swing shaft, the first rotor is moved from the first end portion to the second end portion, and the bottom mold base is lowered in its height level.

7. The bottom mold linkage mechanism for a bottle blowing machine according to any one of claims 1 to 6, **characterized in that,** the bottom mold linkage mechanism further comprises a guide base and a second rotor, the guide base is fixedly disposed on the frame, and the second rotor is disposed on the swinging end,
wherein the guide base is provided with an arc-shaped groove, the arc-shaped extension trajectory of the arc-shaped groove takes the axis line of the swing shaft as the rotation centerline, the second rotor is disposed in the arc-shaped groove in a manner that it is able to move along the extension direction of the arc-shaped groove, and the second rotor is supported on a lower groove wall of the arc-shaped groove in the up-down direction.

8. The bottom mold linkage mechanism for a bottle blowing machine according to claim 7, **characterized in that,** the guide base comprises a first guide member and a second guide member respectively fixed on the frame, the first guide member and the second guide member are spaced apart in the up-down direction, a lower surface of the first guide member and an upper surface of the second guide member are both perpendicular to the axis line of the swing shaft, and the arc-shaped groove is formed between the lower surface of the first guide member and the upper surface of the second guide member.

9. The bottom mold linkage mechanism for a bottle blowing machine according to claim 8, **characterized in that,** the second rotor is cylindrical, and during the process of the first rotor moving along the cylindrical cam groove, the second rotor is always in rolling contact with the arc-shaped groove.

10. The bottom mold linkage mechanism for a bottle blowing machine according to claim 8, **characterized in that,** the first guide member and the second guide member are both arc-shaped members, and the arc-shaped extension trajectory of the arc-shaped members takes the axis line of the swing shaft as the rotation centerline.

11. The bottom mold linkage mechanism for a bottle blowing machine according to claim 7, **characterized in that,** the first rotor and the second rotor are both cylindrical, the first rotor and the second rotor are rotatably mounted on the swinging end jointly through the rotating shaft, and the first rotor and the second rotor are distributed in sequence along the axial direction of the rotating shaft.

12. The bottom mold linkage mechanism for a bottle blowing machine according to claim 11, **characterized in that,** there are two second rotors spaced apart along the axial direction of the rotating shaft, and during the process of the first rotor moving along the cylindrical cam groove, one second rotor is in contact with the first guide member, and the other second rotor is in contact with the second guide member.

13. The bottom mold linkage mechanism for a bottle blowing machine according to claim 7, **characterized in that,** the first rotor and/or the second rotor are rolling bearings.

14. The bottom mold linkage mechanism for a bottle blowing machine according to claim 1, **characterized in that,** one of the bottom mold base and the frame is provided with a guide groove, and the other one thereof is provided with a guide column, wherein the guide column and the guide groove each extend along the up-down direction, and the guide column is disposed in the guide groove in a sliding fit along the up-down direction manner.

15. A bottom mold linkage mechanism for a bottle blowing machine, comprising a frame, a swing shaft disposed on the frame in a manner that it is able to rotate around its own axis line and to control the opening and closing of side mold bases, a bottom mold base liftable disposed on the frame, and a swing arm with one end connected to the swing shaft, one of the other end of the swing arm and the bottom mold base being provided with a cylindrical cam and the other thereof being provided with a first rotor that is able to rotate about its own axis line, the first rotor being rotatably disposed in a cam curve of the cylindrical cam, the cam curve being inclined up and down along the circumferential direction, **characterized in that,** the rotation radius of the other end of the swing arm is greater than the distance between the bottom mold base and the swing shaft;
the bottom mold linkage mechanism further comprises a first guide member and a second guide member that are disposed on the frame in a manner that they are spaced along an up-down direction, and a second rotor disposed on the other end of the swing arm in a manner that it is able to rotate about its own axis line, and when the swing arm is rotated, the second rotor always abuts between the first guide member and the second guide member;
the cylindrical cam or the first rotor is disposed on a side facing the bottom mold base on the other end of the swing arm, and the second rotor is disposed on a side facing away from the bottom mold base on the other end of the swing arm.

16. The bottom mold linkage mechanism for a bottle blowing machine according to claim 15, **characterized in that,** the swing arm has a first position and a second position:
when the swing arm is in the first position, the two side mold bases are in a closed position, and the bottom mold base is at the highest point;
when the swing arm is in the second position, the two side mold bases are in an opened position, and the bottom mold base is at the lowest point.

17. The bottom mold linkage mechanism for a bottle blowing machine according to claim 15, **characterized in that,** the axis line of the cylindrical cam coincides with the axis line of the swing shaft.

18. The bottom mold linkage mechanism for a bottle blowing machine according to claim 15, **characterized in that,** the cylindrical cam is a partial cam disposed on a side of the bottom mold base facing away from the swing arm, and the partial cam has a radian of circumferential surface less than 360°.

19. The bottom mold linkage mechanism for a bottle blowing machine according to claim 18, **characterized in that,** the first rotor and the second rotor are coaxially disposed on opposite sides of the other end of the swing arm, and the axis line of the first rotor is perpendicular to the axis line of the swing shaft.

20. The bottom mold linkage mechanism for a bottle blowing machine according to claim 18, **characterized in that,** the first rotor is disposed on the other end of the swing arm, and the rotation radius of the first rotor is greater than the distance between the bottom mold base and the axis line of the swing shaft.

21. The bottom mold linkage mechanism for a bottle blowing machine according to claim 15, **characterized in that,** the first guide member and the second guide member are respectively disposed on a side of the bottom mode base facing away from the swing shaft.

22. The bottom mold linkage mechanism for a bottle blowing machine according to claim 15, **characterized in that,** the first guide member and the second guide member are arc-shaped guide members, an arc-shaped interval is formed between the first guide member and the second guide member for accommodating the second rotor, and the axis line of the arc-shaped interval coincides with the axis line of the swing shaft.

23. The bottom mold linkage mechanism for a bottle blowing machine according to claim 15, **characterized in that,** a lower surface of the first guide member and an upper surface of the second guide member are both perpendicular to the axis line of the swing shaft

24. The bottom mold linkage mechanism for a bottle blowing machine according to claim 15, **characterized in that,** in the frame and the bottom mold base, one is provided with a guide groove parallel to the axis line of the swing shaft, and the other one is provided with a guide column parallel to the axis line of the swing shaft, and the guide column is liftable disposed in the guide groove.
